# EUROPEAN PATENT APPLICATION

(11) **EP 3 832 503 A1**
(43) Date of publication of application: **09.06.2021**
(21) Application number: 19844444.0
(22) Date of filing: 01.08.2019
(51) Int. Cl.: G06F 21/32, B60R 25/24, B60R 25/25

(54) **BIOMETRIC INFORMATION AUTHENTICATING DEVICE**

(30) Priority: 03.08.2018 JP 2018146855
(71) Applicant: Kabushiki Kaisha Tokai Rika Denki Seisakusho, Niwa-gun, Aichi 480-0195 (JP); TOYOTA JIDOSHA KABUSHIKI KAISHA, Toyota-shi Aichi 471-8571 (JP)
(72) Inventor: OWAKI, Rijin, Niwa-gun, Aichi 480-0195 (JP); OHASHI, Yosuke, Niwa-gun, Aichi 480-0195 (JP); ANDO, Takahiko, Niwa-gun, Aichi 480-0195 (JP); GOTO, Yuya, Toyota-shi, Aichi 471-8571 (JP); OHTA, Yasuhisa, Toyota-shi, Aichi 471-8571 (JP); TAKADA, Naoyuki, Toyota-shi, Aichi 471-8571 (JP); OGAWA, Daisuke, Niwa-gun, Aichi 480-0195 (JP)
(74) Representative: Betten & Resch
(86) International application number: PCT/JP2019/030305
(87) International publication number: WO 2020/027287

(57) **Abstract**

A start switch device 1 serving as a biometric information authenticating device includes a control unit 4 which carries out authentication between biometric information 23 of an operator who has been read, and biometric information (registered biometric information 40) of a registrant who has been registered in advance, and if the number of times the authentication fails is equal to or greater than a pre-determined number (number threshold 43), prohibits an execution instruction for an allocated function.

## Description

### Cross-References to Related Applications

The present patent application claims the priority of Japanese patent application No. 2018/146855 filed on August 3, 2018, and the entire contents of Japanese patent application No. 2018/146855 are hereby incorporated by reference.

### Technical Field

The present invention relates to a biometric information authenticating device.

### Background Art

A start control device is known which is provided with a start switch giving an instruction to start or stop a drive source, a start-up means for starting the drive source, a fingerprint sensor for reading fingerprints, and a control means which, based on inputs from the fingerprint sensor and the start switch, implements a start-up process to control activation of the start-up means (see, e.g., Patent Literature 1).

When the start switch gives an instruction to start, the control means of the start control device performs fingerprint verification by comparing a fingerprint read by the fingerprint sensor with a pre-registered fingerprint before start-up by the start-up means, and once a match is found, the control means authenticates the user as a genuine user and allows the start-up means to start up.

### Citation List

### Patent Literature

Patent Literature 1: JP 2008/174095 A

### Summary of Invention

### Technical Problem

In biometric authentication such as fingerprint verification, the false acceptance rate increases (high convenience) when the false rejection rate is set to low, and the false rejection rate increases (high security) when the false acceptance rate is set to low. As such, the false rejection rate and the false acceptance rate, i.e., convenience and security are in a trade-off relation and it is not possible to reduce the false acceptance rate down to zero. Therefore, with the start control device disclosed in Patent Literature 1, if a person who has not registered his/her fingerprint repeats fingerprint verification attempts many times, this person may be successfully authenticated and be able to start the drive source.

It is an object of the invention to provide a biometric information authenticating device that can ensure both convenience and security.

### Solution to Problem

According to an embodiment of the invention, a biometric information authenticating device comprises a control unit to perform authentication by comparing biometric information read from an operator to pre-registered biometric information of a registered person, and to prohibit to give an instruction to execute an assigned function thereto when the number of authentication failures exceeds a predetermined number.

### Advantageous Effects of Invention

According to an embodiment of the invention, it is possible to provide a biometric information authenticating device that can ensure both convenience and security.

### Brief Description of Drawings

FIG. 1A is an explanatory diagram illustrating the inside of a vehicle in which a start switch device in an embodiment is arranged.
FIG. 1B is a front view showing the start switch device in the embodiment.
FIG. 2A is a block diagram illustrating the start switch device in the embodiment.
FIG. 2B is a block diagram illustrating the vehicle.
FIG. 2C is an explanatory diagram illustrating a captured image that is captured by a biometric information sensor.
FIG. 3 is a flowchart showing an operation of the start switch device in the embodiment. Description of Embodiments

### (Summary of the embodiment)

A biometric information authenticating device in the embodiment has a control unit to perform authentication by comparing biometric information read from an operator to pre-registered biometric information of a registered person, and to prohibit to give an instruction to execute an assigned function thereto when the number of authentication failures exceeds a predetermined number.

This biometric information authenticating device is configured such that an instruction to execute the assigned function is prohibited to be given when the number of authentication failures exceeds the predetermined number. Therefore, as compared when such a configuration is not adopted, successful authentication caused by repeating unsuccessful authentication attempts is suppressed without increasing the security level at the cost of convenience and it is possible to ensure both convenience and security.

### (Embodiment)

### (General configuration of a start switch device 1)

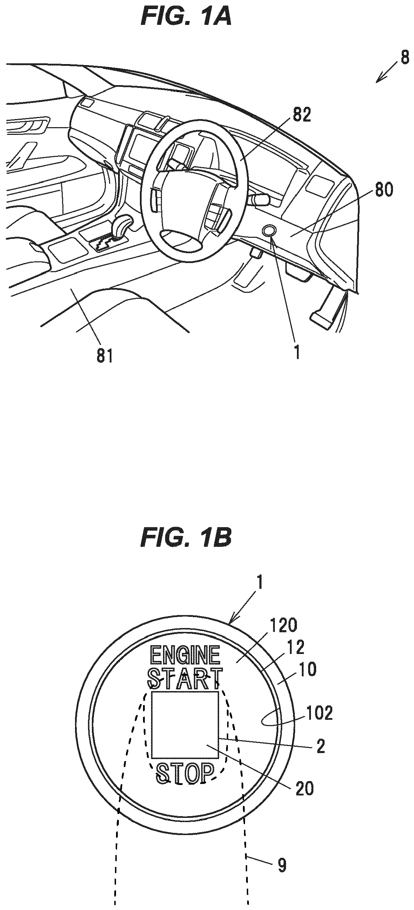

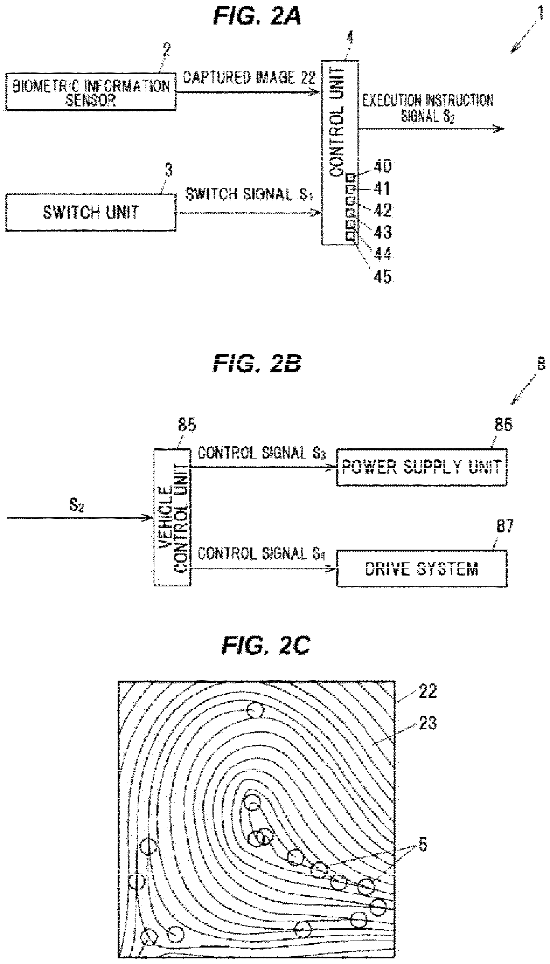

FIG. 1A is an explanatory diagram illustrating the inside of a vehicle in which a start switch device in the embodiment is arranged, and FIG. 1B is a front view showing the start switch device in the embodiment. FIG. 2A is a block diagram illustrating the start switch device in the embodiment, FIG. 2B is a block diagram illustrating the vehicle, and FIG. 2C is an explanatory diagram illustrating a captured image that is captured by a biometric information sensor. In each drawing of the embodiment described below, a scale ratio may be different from an actual ratio. In addition, in FIGS. 2A and 2B, flows of main signals and information are indicated by arrows.

The start switch device 1 as the biometric information authenticating device is electrically connected to an electronic device mounted on a vehicle 8, as an example. When the authentication by the start switch device 1 is successful, this electronic device executes functions assigned to the start switch device 1 upon determination that an operator is a registered person. The assigned function in the present embodiment is a function of starting a drive system 87 of the vehicle 8 and a function of transitioning the power state of the vehicle 8, but it is not limited thereto. In addition, the biometric information authenticating device is not limited to the start switch device 1 and may be used for, e.g., authentication for locking or unlocking doors or authentication for logging in to electronic devices, etc.

As shown in FIG. 1A, this start switch device 1 is arranged on, e.g., a panel 80 in front of the operator sitting in a driver's seat, a floor console 81 located between the driver's seat and the front passenger seat, or a steering wheel 82, etc. This start switch device 1 can instruct a vehicle control unit 85 of the vehicle 8 to start, or to prepare to start, the drive system 87 of the vehicle 8 by a push operation (ON operation), and instruct to stop the drive system 87 by a next push operation (OFF operation).

The function of starting the drive system 87 of the vehicle 8 and the function of transitioning the power state of the vehicle 8 are judged by, e.g., the vehicle control unit 85 based on an execution instruction signal S₂ output from the start switch device 1 and the operating conditions for a shifting device, etc.

In particular, when the drive system 87 is an internal combustion engine (an engine), the engine is started by a push operation performed in a state in which the operating conditions for the shifting device or a braking device are met. Meanwhile, when the drive system 87 is a motor, preparation for start, which is a current supply to the motor, is carried out by a push operation performed in a state in which the above-described operating conditions are met. Furthermore, when the drive system 87 is an engine/motor hybrid, start or preparation for start corresponding to the drive system prioritized at the time of start is carried out by a push operation performed in a state in which the above-described operating conditions are met. An OFF operation performed after this ON operation gives an instruction to stop the drive system 87.

Then, when a push operation is performed without activation of the brake device which is the operating condition, the start switch device 1 outputs the execution instruction signal S₂ to perform transition of power state such as between OFF (power off), ACC (allowing some of electronic devices to be used) or ON (allowing all electronic devices to be used), as an example. Based on, e.g., such an execution instruction signal S₂ and the above-mentioned operating condition, the vehicle control unit 85 generates and outputs a control signal S₃ for controlling a power-supply unit 86.

As shown in FIG. 2A, the start switch device 1 has a control unit 4 that performs authentication by comparing biometric information read from the operator to pre-registered biometric information (registered biometric information 40) of the registered person, and prohibits to give an instruction to execute the assigned function when the number of authentication failures exceeds a predetermined number.

As shown in FIG. 2A, the start switch device 1 is also provided with, e.g., a biometric information sensor 2 and a switch unit 3.

Biometric information 23 in the present embodiment is, e.g., a fingerprint of an operating finger 9, as shown in FIGS. 1B and 2C. However, the biometric information 23 is not limited to the fingerprint of the operating finger 9 and may be a vein of the operating finger 9, a vein of a palm, an iris of an eye, or a shape of a portion of the body such as face. In addition, the biometric information sensor 2 does not need to be mounted on the start switch device 1 as long as it can read the biometric information 23 such as, e.g., iris even if located at a distance from an object to be operated.

In case of reading, e.g., a fingerprint, the biometric information sensor 2 used here is a sensor of optical, capacitive, electric field strength measuring, pressure-sensitive, or thermal type, etc., which is configured to read a fingerprint.

Meanwhile, in case of reading, e.g., a vein of the operating finger 9 or of a palm, the biometric information sensor 2 used is a sensor configured to read a vein based on reflection of emitted infrared radiation.

Then, in case of reading, e.g., both a fingerprint and a vein, the biometric information sensor 2 used is a sensor configured to extract a fingerprint and a vein by processing an image captured under visible light.

Furthermore, in case of reading, e.g., an iris, the biometric information sensor 2 used is a sensor configured to read an iris by processing an image captured under infrared light emission.

Still further, in case of reading, e.g., a shape of a portion of the body such as face, the biometric information sensor 2 used is a sensor configured to read an uneven shape on a subject based on depths at plural measurement points on the captured subject.

The biometric information sensor 2 in the present embodiment is a capacitive sensor that reads a fingerprint, as an example. As shown in FIG. 2A, the biometric information sensor 2 outputs, e.g., a captured image 22, which is produced based on read capacitances, to the control unit 4.

As shown in FIG. 1B, the start switch device 1 is also provided with, e.g., a cylindrical main body 10. An operation button 12 is inserted into an opening 102 of the main body 10.

Meanwhile, as an example, the vehicle 8 is provided with the vehicle control unit 85, the power supply unit 86 and the drive system 87, as shown in FIG. 2B. The vehicle control unit 85 is, e.g., a microcomputer composed of a CPU (Central Processing Unit), and a RAM (Random Access Memory) and a ROM (Read Only Memory) as semiconductor memories, etc. The vehicle control unit 85 controls the power supply unit 86 and the drive system 87 based on the execution instruction signal S₂ output from the start switch device 1 and the above-mentioned operating conditions.

The power supply unit 86 includes, e.g., a battery and a control circuit, etc., mounted on the vehicle 8. The vehicle control unit 85 generates and outputs the control signal S₃ for controlling the power-supply unit 86 based on, e.g., the execution instruction signal S₂ input thereto and the above-mentioned operating conditions.

The vehicle control unit 85 generates and outputs a control signal S₄ for controlling the drive system 87 based on, e.g., the execution instruction signal S₂ input thereto and the above-mentioned operating condition.

### (Configuration of the biometric information sensor 2)

The biometric information sensor 2 is arranged so that, e.g., a reading surface 20 is exposed on an operation surface 120 of the operation button 12, as shown in FIG. 1B. The biometric information sensor 2 is configured to read the biometric information 23 from the operation finger 9 which is in contact with the reading surface 20 when the operator performs a push operation on the operation button 12. Alternatively, the reading surface 20 may be arranged under the operation surface 120 without being exposed on the operation surface 120.

The biometric information sensor 2 is provided with, e.g., the plural detection electrodes which are arranged in rows and columns in a grid pattern under the reading surface 20. As an example, several ten thousand to several hundred thousand detection electrodes are formed and arranged at intervals of several µm to several tens µm.

The biometric information sensor 2 is configured to scan all detection electrodes by, e.g., repeating a process of reading capacitances of the detection electrodes arranged in one row while changing columns and then subsequently reading capacitances of the detection electrodes arranged in a different row. The scanning cycle is about 100 ms, as an example.

The biometric information sensor 2 outputs, e.g., the captured image 22, which is formed based on plural capacitances read by scanning, to the control unit 4. The captured image 22 is formed based on, e.g., capacitances in one cycle.

In particular, the biometric information sensor 2 generates the captured image 22 by, e.g., classifying the capacitances into capacitances of not less than a predetermined threshold value to be assigned "1" and capacitances of less than the threshold value to be assigned "0" and associating the capacitances with the positions of the detection electrodes.

The captured image 22 shown in FIG. 2C is produced in such a manner that the positions of the detection electrodes assigned "1" described above are shown in black and the positions of the detection electrodes assigned "0" are shown in white, as an example. The circles in the drawing are added to show some of characteristic features 5 (described later).

The high-capacitance positions are positions of ridges of the fingerprint which are close to the detection electrodes, hence, capacitance is high. Meanwhile, the low-capacitance positions are positions of valleys of the fingerprint which are far from the detection electrodes, hence, capacitance is low. Therefore, as an example, the captured image 22 shown in FIG. 2C is obtained when the high-capacitance positions are shown in black and the low-capacitance positions are shown in white. The image shown in black in the captured image 22 is the read biometric information 23.

The control unit 4 may be configured to, e.g., select a captured image 22, which is suitable for extraction of the characteristic features 5, from plural captured images 22 captured after the contact of the operating finger 9 with the reading surface 20, or may be configured to use the captured image 22, which is captured by being triggered by the event that the switch unit 3 is turned on, for extraction of the characteristic features 5.

### (Configuration of the switch unit 3)

As an example, the switch unit 3 is configured as a rubber dome switch which comes into contact with an end portion of the operation button 12 on the opposite side to the operation surface 120. The rubber dome switch is provided with, e.g., a rubber dome which generates an elastic force and has a movable contact, and a switch substrate on which the rubber dome is arranged and which has a fixed contact facing the movable contact.

When the operation button 12 is pushed into the main body 10 by a push operation, the movable contact is electrically conducted to the fixed contact due to deformation of the rubber dome and a switch signal S₁, which indicates that the switch is turned on, is output to the control unit 4. The start switch device 1 is configured that when, e.g., the push operation ends, the operation button 12 returns to the initial position by an elastic force of the rubber dome.

### (Configuration of the control unit 4)

The control unit 4 is, e.g., a microcomputer composed of a CPU performing calculation and processing, etc., of the acquired data according to a stored program, and a RAM and a ROM as semiconductor memories, etc. The ROM stores, e.g., a program for operation of the control unit 4. The RAM is used as, e.g., a storage area for storing the registered biometric information 40, a similarity threshold value 41, count information 42, a count threshold value 43, a first period threshold value 44, a second period threshold value 45, and calculation results, etc. In addition, the control unit 4 has, inside thereof, a means for generating a clock signal, and operates and measures time based on the clock signal.

The control unit 4 associates, e.g., biometric information of plural registered operating fingers of the registered person with the registered person's name and stores it as the registered biometric information 40.

The control unit 4 here performs, e.g., an extraction process on the captured image 22 and extracts the characteristic features 5. The extraction process is, e.g., a process of extracting fingerprint ridges, etc.

The characteristic feature 5 is, e.g., a center point, a bifurcation point, an ending point or a delta, etc., as shown in FIG. 2C, but it is not limited thereto. The center point is a point at the center of the fingerprint. The bifurcation point is a point at which a fingerprint ridge bifurcates. The ending point is a point at which a ridge ends. The delta is a point at which ridges from three directions meet.

The control unit 4 extracts, e.g., the characteristic features 5 from the captured image 22. The control unit 4 then compares, e.g., the acquired registered biometric information 40 to the biometric information 23 from which the characteristic features 5 are extracted, and calculates a degree of similarity based on the positions of the characteristic features 5 and distances between the characteristic features 5, etc. Then, when the switch unit 3 is ON and the degree of similarity is not less than the similarity threshold value 41, the control unit 4 outputs the execution instruction signal S₂ upon determination that the biometric information 23 is successfully authenticated.

The similarity threshold value 41 is 80%, as an example. In other words, when, e.g., the number of the characteristic features 5 of the biometric information 23 used for authentication is eighty and when not less than sixty-four characteristic features 5 match those of the registered biometric information 40, the control unit 4 determines that the operator is a registered person. The match here includes match of the position of the characteristic feature 5 and a distance between the characteristic features 5, etc.

For example, based on the switch signal S₁, the control unit 4 determines that the switch unit 3 is turned on, i.e., a push operation is performed, and outputs the execution instruction signal S₂, which gives an instruction to execute the assigned function, to the vehicle control unit 85 electromagnetically connected thereto when the biometric information 23 is successfully authenticated, as shown in FIGS. 2A and 2B.

The vehicle control unit 85 may be configured to implement, e.g., settings of on-vehicle devices which have been set by the registered person who is biometrically authenticated, based on this execution instruction signal S₂. The on-vehicle device when being, e.g., a seat driving device moves a seat to a seat position which has been set by the registered person. Meanwhile, the on-vehicle device when being, e.g., an air conditioner implements the settings, such as the set temperature and the air volume, which have been set by the registered person. Furthermore, the on-vehicle device when being, e.g., a mirror driving device drives mirrors to the positions which have been set by the registered person. Electromagnetic connection is, e.g., connection using at least one of connection via a conductor, connection via light which is a kind of electromagnetic wave, and connection via radio waves which is also a kind of electromagnetic wave.

The count information 42 is information of the number of authentication failures. When the authentication failed, the control unit 4 adds 1 to the current number to update the count information 42.

The count threshold value 43 is a threshold value for the number of authentication failures counted until giving an instruction to execute the assigned function is prohibited. When the number of authentication failures based on the count information 42 exceeds the count threshold value 43, the control unit 4 prohibits to give an instruction to execute the assigned function, i.e., prohibits output of the execution instruction signal S₂. The count threshold value 43 is five times, as an example.

The control unit 4 is configured to prohibit to give the instruction to execute the assigned function when the number of authentication failures exceeds a predetermined number within a predetermined first period.

This predetermined first period is set to limit the time period in which the number of authentication failures is counted. If the first period is not set or is set to be long, e.g., failed authentications for the registered person may be also accumulated gradually and the number of failures exceeds the count threshold value 43, causing that an execution instruction is prohibited and convenience is compromised. Based on this, the start switch device 1 is configured that counting the number of authentication failures is limited within the first period, thereby ensuring both convenience and security.

The first period is set as, e.g., the first period threshold value 44 shown in FIG. 2A. The control unit 4 measures time elapsed since the first failure and prohibits output of the execution instruction signal S₂ when the number of authentication failures exceeds a predetermined number within the first period indicated by the first period threshold value 44. The first period threshold value 44 is one hour, as an example.

The control unit 4 is also configured to prohibit to give the instruction to execute the assigned function for a predetermined second period when the number of authentication failures exceeds the predetermined number.

This predetermined second period is a period during which giving the execution instruction is prohibited. This prohibition on the execution instruction is set on the assumption that a third party who is not a registered person fails to be authenticated. Therefore, the second period is set as, e.g., a period in which the third party is considered to have left, and it is also set as a period which does not greatly compromise convenience since the registered person is also restricted from using.

The control unit 4 measures time elapsed since the number of failures exceeds the count threshold value 43, and prohibits output of the execution instruction signal S₂ during the second period indicated by the second period threshold value 45 even if any authentication is established. The second period is 12 hours, as an example.

As a modification, the control unit 4 may be configured to remove the prohibition on giving the instruction to execute the assigned function when, e.g., authentication by an electronic key, etc., is successful in the state that the elapsed time is still less than the second period threshold value 45. The first period threshold value 44 and the second period threshold value 45 can be set by the registered person.

The control unit 4 controls the biometric information sensor 2 so that the switch signal S₁ output from the switch unit 3 triggers scanning of the reading surface 20, as an example. In this case, since a push operation is being performed on the operation surface 120, a contact area between the operating finger 9 and the reading surface 20 is larger than that when touching the reading surface 20 before the push operation, and more characteristic features 5 can be extracted.

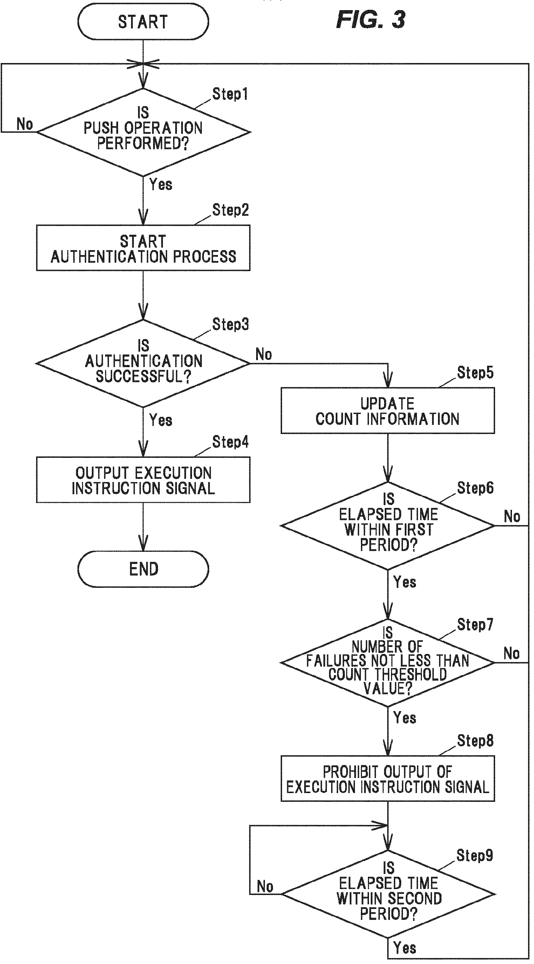

Next, an example of an operation of the start switch device 1 in the present embodiment will be described along with the flowchart of FIG. 3.

### (Operation)

The control unit 4 of the start switch device 1 determines that a push operation is performed when it is "Yes" in Step 1, i.e., when the switch signal S₁ is input from the switch unit 3 (Step 1: Yes), and the control unit 4 starts, by being triggered by the switch signal S₁, the authentication process based on the captured image 22 acquired from the biometric information sensor 2 (Step 2).

The control unit 4 compares the biometric information 23, which is based on the captured image 22, to the registered biometric information 40 and determines successful authentication or failure based on whether or not the degree of similarity is not less than the similarity threshold value 41. When the authentication is successful (Step 3: Yes), the control unit 4 outputs the execution instruction signal S₂ for executing the assigned function (Step 4) and ends the operation associated with the push operation.

Meanwhile, when the authentication failed in Step 3 (Step 3: No), the control unit 4 adds 1 to the number of failures to update the count information 42 (Step 5). In this regard, when the first authentication failed, the control unit 4 measures time elapsed from the failure to determine the first period.

When the measured elapsed time is within the first period specified by the first period threshold value 44 (Step 6: Yes), the control unit 4 checks the number of authentication failures. When the number of failures based on the updated count information 42 is not less than the count threshold value 43 (Step 7: Yes), the control unit 4 prohibits output of the execution instruction signal S₂ (Step 8). The control unit 4 measures time elapsed from Step 8 to determine the second period.

When it is "Yes" in Step 9, i.e., when time elapsed since the start of the prohibition exceeds the second period specified by the second period threshold value 45 (Step 9: Yes), the control unit 4 removes the prohibition and proceeds the process to Step 1.

Here, when the elapsed time exceeds the first period in Step 6 (Step 6: No), the control unit 4 removes the prohibition and proceeds the process to Step 1.

Then, when the number of failures is less than the count threshold value 43 in Step 7 (Step 7: No), the control unit 4 proceeds the process to Step 1.

### (Effects of the embodiment)

The start switch device 1 in the present embodiment can ensure both convenience and security. In particular, the start switch device 1 is configured that giving an instruction to execute the assigned function is prohibited when the number of authentication failures exceeds the count threshold value 43. Therefore, as compared when such a configuration is not adopted, successful authentication caused by repeating unsuccessful authentication attempts is suppressed without increasing the security level at the cost of convenience and it is possible to ensure both convenience and security which are in a trade-off relation under normal conditions.

When the time elapsed since the first authentication failure exceeds the first period, the start switch device 1 removes the prohibition on output of the execution instruction signal S₂. Therefore, even if the third party who is not a registered person repeated authentication attempts and the execution instruction is thereby prohibited, the start switch device 1 removes the prohibition so that authentication can be started again when the elapsed time exceeds the first period and it is possible to ensure both convenience and security, unlike when such a configuration is not adopted.

The start switch device 1 is configured that output of the execution instruction signal S₂ is prohibited for the second period when the number of authentication failures exceeds the count threshold value 43. Therefore, the security level is high as compared to when such a configuration is not adopted.

The start switch device 1 provides high security since start-up, etc., is disabled when the number of failures exceeds the count threshold value 43 as a result of consecutive authentication attempts by the third party, who is not a registered person, with an intention to start the drive system 87. In addition, even if the third party failed authentication consecutively and start-up is disabled, the start switch device 1 can remove the prohibition when authentication by an electronic key is successful, and also removes the prohibition when exceeding the second period. Therefore, it is possible to ensure both convenience and security.

Although some embodiment and modifications of the invention have been described, these embodiment and modifications are merely examples and the invention according to claims is not to be limited thereto. These new embodiment and modifications may be implemented in various other forms, and various omissions, substitutions and changes, etc., can be made without departing from the gist of the invention. In addition, all combinations of the features described in these embodiment and modifications are not necessary to solve the problem of the invention. Further, these embodiment and modifications are included within the scope and gist of the invention and also within the invention described in the claims and the range of equivalency.

### Reference Signs List

1 START SWITCH DEVICE
2 BIOMETRIC INFORMATION SENSOR
3 SWITCH UNIT
4 CONTROL UNIT
8 VEHICLE
9 OPERATING FINGER
23 BIOMETRIC INFORMATION
40 REGISTERED BIOMETRIC INFORMATION
86 POWER SUPPLY UNIT
87 DRIVE SYSTEM

## Claims

1. A biometric information authenticating device, comprising a control unit to perform authentication by comparing biometric information read from an operator to pre-registered biometric information of a registered person, and to prohibit to give an instruction to execute an assigned function thereto when the number of authentication failures exceeds a predetermined number.

2. The biometric information authenticating device according to claim 1, wherein the control unit prohibits to give the instruction to execute the assigned function when the number of authentication failures exceeds the predetermined number within a predetermined first period.

3. The biometric information authenticating device according to claim 2, wherein the control unit has a first period threshold value set as the predetermined first period and determines it is within the predetermined first period when time elapsed since the first authentication failure is smaller than the first period threshold value.

4. The biometric information authenticating device according to any one of claims 1 to 3, wherein, when the number of authentication failures exceeds the predetermined number, the control unit prohibits to give the instruction to execute the assigned function for a predetermined second period.

5. The biometric information authenticating device according to claim 4, wherein the control unit removes the prohibition on giving the instruction to execute the assigned function when a different authentication other than said authentications is established during the second period.

6. The biometric information authenticating device according to any one of claims 1 to 5, further comprising:
a switch unit receiving an ON operation or an OFF operation for the assigned function; and
a biometric information sensor for reading the biometric information of the operator,
wherein the control unit is configured to read the biometric information of the operator when the switch unit received the ON operation.

7. The biometric information authenticating device according to claim 6, wherein the biometric information sensor reads one or more selected from a fingerprint, a vein, a shape of a portion of the body, and an iris of an eye, as the biometric information of the operator, and the control unit performs the authentication using one or more selected from a fingerprint, a vein, a shape of a portion of the body, and an iris of an eye that are pre-registered as the biometric information of the operator.

8. The biometric information authenticating device according to claim 7, wherein the biometric information sensor comprises a sensor of optical, capacitive, electric field strength measuring, pressure-sensitive, or thermal type that reads a pattern of the fingerprint.

9. The biometric information authenticating device according to claim 7, wherein the biometric information sensor comprises a sensor configured to read the vein based on reflection of emitted infrared radiation.

10. The biometric information authenticating device according to any one of claims 1 to 9, wherein the assigned function comprises a function of starting a drive system of a vehicle and a function of transitioning the power state of the vehicle.
